# EUROPEAN PATENT SPECIFICATION

(11) **EP 0 737 320 B1**
(45) Date of publication and mention of the grant of the patent: **02.08.2000**
(21) Application number: 95935724.5
(22) Date of filing: 13.10.1995
(51) Int. Cl.: G01S 5/14, G05D 1/02

(54) **SYSTEM AND METHOD FOR PRECISELY DETERMINING AN OPERATING POINT FOR AN AUTONOMOUS VEHICLE**
VORRICHTUNG UND VERFAHREN ZUR GENAUEN BESTIMMUNG DES ARBEITSPUNKTES EINES AUTONOMEN FAHRZEUGES
SYSTEME ET PROCEDE DE DETERMINATION PRECISE DU POINT D'INTERVENTION D'UN VEHICULE AUTONOME

(30) Priority: 24.10.1994 US 327864
(43) Date of publication of application: 16.10.1996
(73) Proprietor: CATERPILLAR INC., Peoria Illinois 61629-6490 (US)
(72) Inventor: ALLEN, William, E., Peoria, IL 61614 (US)
(74) Representative: Brunner, Michael John
(86) International application number: US9512828
(87) International publication number: WO9612973

(56) References cited:
- GB-A- 2 158 965
- US-A- 5 075 693
- PROCEEDINGS OF THE IEEE - IEE VEHICLE NAVIGATION AND INFORMATIONS SYSTEMS CONFERENCE (CAT. NO.93CH3285-4), PROCEEDINGS OF VNIS '93 - VEHICLE NAVIGATION AND INFORMATION SYSTEMS CONFERENCE, OTTAWA, ONT., CANADA, 12-15 OCT. 1993, NEW YORK, NY, USA, IEEE, USA, pages 466-471, ABOUSALEM M A ET AL 'A quality control approach for GPS-based automatic vehicle location and navigation systems'

## Description

This invention relates generally to the control of autonomous vehicles and, more particularly, to a system and method for determining the precise operating point of an autonomous vehicle.

Caterpillar Inc. of Peoria, Illinois, manufactures off-road mining vehicles. For example, the Caterpillar 777C is an off-road mining truck. Commonly owned, U.S. Patent No. 5,390,125, granted 14 February 1995, "Vehicle Position Determination System and Method," discloses an autonomous vehicle system for use with a mining vehicle such as the 777C truck.

In order to achieve autonomy, a vehicle must at all times be able to determine it position relative to its environment. The vehicle system disclosed in the '125 patent determines vehicle position using a vehicle positioning system (VPS). The VPS determines an accurate estimate of vehicle position by performing a weighted average of a first position estimate and a second position estimate. The first position estimate is received from a global positioning system (GPS) receiver. The second position estimate is received from an inertial reference unit. The first and second position estimates are weighted as a function of their predicted accuracy to produce a more accurate third position estimate. Such a system as that disclosed in the '125 patent tends to be very expensive. For example, the inertial reference unit alone can cost somewhere between $10,000 and $100,000.

It is possible to use a GPS receiver alone for positioning. However, when high accuracy is required, integrated positioning systems are preferred. An integrated positioning system uses measurements from several different types of sensors to achieve highly accurate positioning information. Many examples of integrated positioning systems are known. Such integrated systems use GPS navigation signals as well as measurements from inertial and other vehicle motion type sensors to produce more accurate position estimates. However, these systems are generally of custom design and are therefore expensive and burdensome to implement.

What is needed is a system which can produce accurate position estimates in a cost-effective manner. Such a system would preferably use relatively inexpensive, commercially available components.

According to US-A-5 075 693 there is provided a computer-based system for precisely determining an operating point for a land based vehicle, comprising: receiver means, mounted on the vehicle, for receiving navigation signals from a satellite-based positioning system and for determining a receiver determined position for the vehicle using said navigation signals; sensor means for measuring at least one dynamic parameter of the vehicle; and Kalman filtering means for combining said receiver determined position and said at least one dynamic parameter of the vehicle from said sensor means to determine the operating point, wherein the operating point includes an estimated position, and wherein said Kalman filtering means includes means for changing to a stationary Kalman filter model to achieve a better determination of the operating point when said sensor means indicates that the vehicle is stationary.

The present invention is characterised in that the Kalman filtering means includes means for modelling a time lag associated with said receiver means and affecting the timeliness of the receiver determined position; and means for using said modelled time lag and said receiver determined position to provide an improved estimated position.

The invention also includes a method for precisely determining an operating point for a land-based vehicle, comprising: receiving navigation signals from a satellite-based positioning system and determining a receiver determined position for the vehicle using said navigation signals; measuring a distance travelled by the vehicle; Kalman filtering said receiver determined position and said measured distance to determine the operating point for the vehicle, wherein the operating point includes an estimated position; and changing to a stationary Kalman filter model when said measured distance falls below a first threshold value, **characterised in that** said Kalman filtering includes modelling a time lag associated with said receiver means which affects the timeliness of the receiver determined position; and using said modelled time lag and said receiver determined position to provide an improved estimated position.

Thus a system and method are provided for precisely determining an operating point of an autonomous vehicle, such as a mining truck. A truck reference unit (TRU) determines the operating point of the vehicle. The term "operating point" refers to a number of parameters which describe the dynamic position of a vehicle. For example, these dynamic parameters may include, but are not limited to, position, velocity, acceleration, speed, heading, heading rate, pitch, pitch rate, roll and roll rate. In the preferred embodiment, the operating point includes north position, east position, speed, heading, and heading rate.

In the preferred embodiment, the invention is implemented in an autonomous vehicle system. The truck reference unit (TRU) determines the operating point of the vehicle. A navigator receives the operating point from the TRU and uses the operating point information to navigate the vehicle.

The TRU combines the measurements received from several commercially available sensors to determine the vehicle's operating point. In the preferred embodiment, these sensors include a satellite positioning system receiver, a speed indicator, an odometer, a resolver, and an angular rate sensor. The measurements are weighted and combined to provide an accurate estimate of the operating point.

The TRU is designed so that the loss of any one sensor will not disable the ability of the TRU to provide the navigator with an estimate of the operating point, though that estimate may be degraded. This allows the navigator to continue to command the autonomous vehicle along a desired route until the sensor comes back on line or is serviced.

In the preferred embodiment, the TRU is a computer-based system which receives measurements of: north position, north velocity, east position, and east velocity from a Global Positioning System (GPS) receiver; distance and direction travelled from a bidirectional odometer; speed from a true ground speed doppler radar; steering angle from a resolver; and heading rate from a solid-state angular rate sensor. The TRU uses either a nine-state or a four-state extended Kalman filter to combine the measurements to compute an estimate of the vehicle's operating point. The nine-state extended Kalman filter is used when the vehicle is moving. The four-state extended Kalman filter is used when the vehicle is stationary.

The foregoing and other features and advantages of the invention will be apparent from the following, more particular description of a preferred embodiment of the invention, as illustrated in the accompanying drawings, in which:
FIG. 1 is a high level block diagram showing the autonomous vehicle system of the invention;
FIG. 2 is a block diagram illustrating the structure of the truck reference unit of the invention;
FIG. 3 is a flow chart illustrating the operation of the truck reference unit of the invention; and
FIG. 4 is a flow chart illustrating the filtering operation performed by the truck reference unit of the invention.

The preferred embodiment of the invention will now be described with reference to the figures, in which like reference numbers indicate like elements. In addition, the left-most digit of each reference number indicates the figure in which the number is first used.

### Industrial Applicability

The invention is a system and method for precisely determining the operating point of an autonomous vehicle. The term "operating point" refers to a dynamic vehicle position. The dynamic parameters describing a vehicle's dynamic position may include, for example, position, velocity, acceleration, heading, pitch, roll, speed, heading rate, pitch rate, and roll rate. In the preferred embodiment, operating point includes north position, east position, speed, heading, and heading rate. For purposes of illustration, the invention is described in the environment of an autonomous vehicle system. This is done for purposes of illustration only. A person skilled in the art will recognize that the invention may be used in other applications.

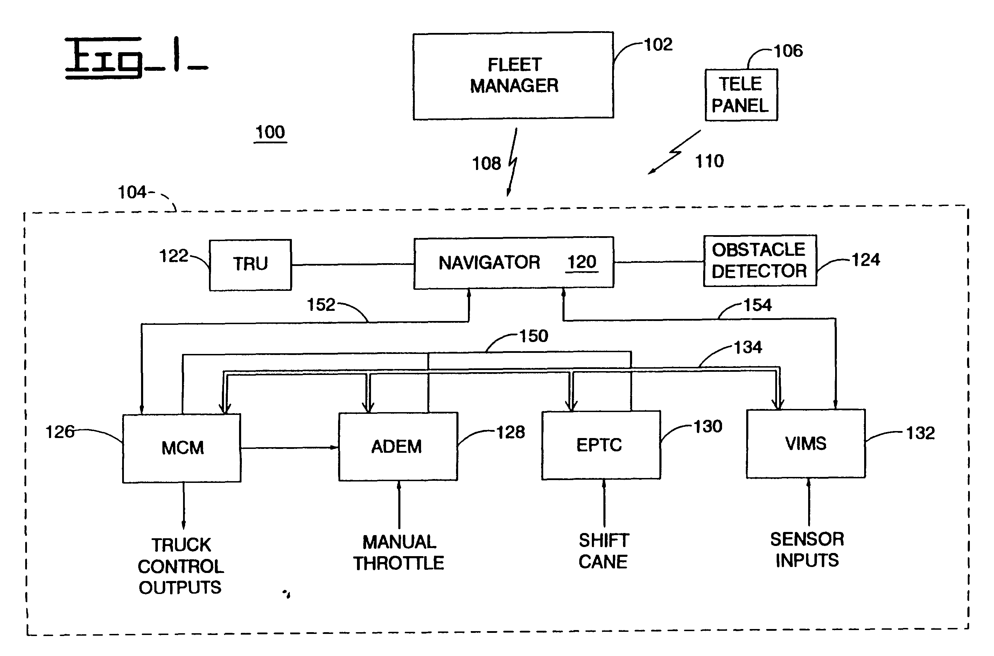

Figure 1 is a high level block diagram showing an autonomous vehicle system 100. Autonomous vehicle system 100 includes a fleet manager 102, a vehicle control system 104, and a tele-operation panel 106. Fleet manager 102 is configured to manage a fleet of autonomous mining vehicles such as dump trucks. Fleet manager 102 acts like a foreman, assigning tasks to the mining vehicles and tracking their progress as they perform these tasks. Fleet manager 102 communicates with each vehicle via a radio link 108. Each vehicle includes an on-board vehicle control system 104. Vehicle control system 104 permits autonomous operation of the mining vehicle under the control of fleet manager 102. Vehicle control system 104 includes a navigator 120, a truck reference unit (TRU) 122, an obstacle detector 124, a machine control module (MCM) 126, an advanced diesel engine manager (ADEM) 128, an electronic programmable transmission control (EPTC) 130, and a vital information management system (VIMS) 132.

Navigator 120 receives instructions from fleet manager 102 via radio link 108. The instructions include, for example, a work assignment or task. From the task, navigator 120 determines a route to be followed. The route may be, for example, a haul segment between an excavation site and a crusher site in an open pit mining operation.

TRU 122 determines the operating point of the vehicle using measurements determined from a satellite based positioning system and onboard sensors. Based on the vehicle's operating point and the desired route, navigator 120 generates a desired steering angle and a desired speed for the vehicle. Obstacle detector 124 is a radar unit which scans the area in front of the vehicle for obstacles. When obstacle detector 124 detects an obstacle, it provides an indication that an obstacle is detected and/or the location of the obstacle to navigator 120. Navigator 120 may then stop the vehicle or navigate around the obstacle.

Tele-operation panel 106 may be used to communicate, via radio signals as indicated at 110, steer angle, speed and other commands directly to navigator 120 to allow remote control operation of the vehicle.

Operation of fleet manager 102, navigator 120, and obstacle detector 124 are described in detail in the '125 patent which is incorporated by reference above.

Navigator 120, TRU 122 and obstacle detector 124 represent onboard intelligence for the vehicle which allows autonomous control commands to be generated in the form of the speed and steering angle commands. Navigator 120 produces speed and steering angle commands based on a desired route of travel and the vehicle's operating point. Navigator 120 computes the adjustments of the present steering angle and speed based on the current operating point to move the vehicle along the desired route. Fleet manager 102 provides navigator 120 with the desired route. TRU 122 provides navigator 120 with the operating point of the autonomous vehicle.

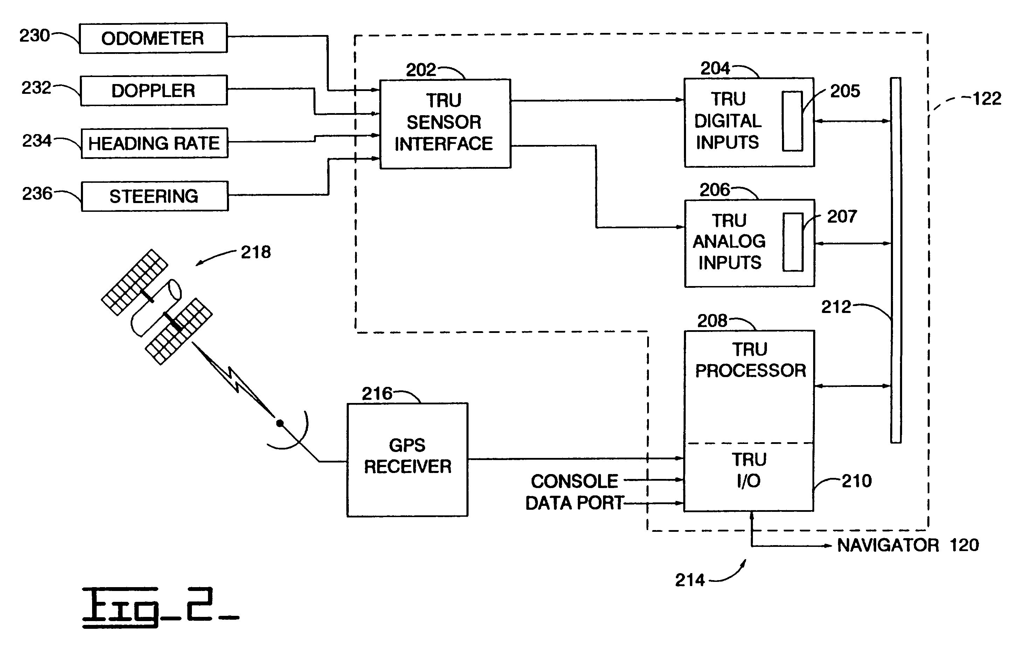

A block diagram illustrating the structure of TRU 122 is shown in FIG. 2. In the preferred embodiment, TRU 122 includes a TRU sensor interface 202, a TRU digital input card 204, a TRU analog input card 206, a TRU processor 208, a TRU serial interface 210, and a TRU databus 212. Sensor interface 202 receives signals from a bidirectional odometer 230, a doppler ground speed indicator 232, a solid-state heading rate sensor 234, and a steering resolver 236. Bidirectional odometer 230 measures the distance the vehicle travels and the direction, i.e. forward or reverse. Doppler ground speed indicator 232 measures the speed the vehicle is travelling. Solid-state heading rate sensor 234 measures the rate at which the vehicle is changing heading or turning. Steering resolver 236 measures the steering angle of the vehicle. One skilled in the art would recognize that various other sensors could be used to measure the same parameters. For example, a tachometer could be used to measure speed, or a gyroscope could be used to measure heading rate.

Furthermore, measurements could be taken from additional or different sensors and incorporated into the invention in an attempt to gain additional accuracy. For example, an inclinometer could be used to measure angle of ascent, a pitch rate sensor could be used to measure the rate of change of ascent, or a compass could be used to measure heading. On the other hand, some sensors could be eliminated in an effort to save costs at the expense of some loss in accuracy.

The sensor measurements are collected by sensor interface 202. Sensor interface 202 passes digital signals, i.e. timing strobes, pulse-width modulated signals, etc., to digital input card 204, and analog signals, i.e. voltages, currents, etc., to analog input card 206. Digital input card 204 converts the digital timing and pulse signals to digital values and stores them in a digital register 205. Analog input card 206 scales and converts the analog signals to digital values and stores them in an analog register 207. The TRU processor 208, a general purpose microprocessor, accesses digital register 205 or analog register 207 via databus 212 to obtain the sensor measurements.

TRU 122 receives position data from a satellite-based positioning system 218. In the preferred embodiment, the satellite-based positioning system 218 is the Global Positioning System (GPS). A GPS receiver 216 receives satellite signals from satellite-based positioning system 218 and determines its own position based on these signals. In the preferred embodiment, GPS receiver 216 is differential GPS receiver MX 9212 commercially available from Magnavox Electronic Systems Company, Torrance, California. GPS receiver 216 provides TRU 122 with receiver determined measurements including north position, east position, north velocity, and east velocity as well as timing information. TRU 122 receives the measurements from GPS receiver 216 via serial interface 210. TRU processor 208 receives the GPS receiver measurements from serial interface 210. With the GPS receiver determined measurements and the sensor measurements obtained above, TRU processor 208 computes an estimate of the operating point of the autonomous vehicle. TRU processor 208 passes the operating point to the serial interface 210 which in turn sends the operating point to navigator 120 over serial data line 214.

The remaining description requires a brief introduction to Kalman filtering. In general, a Kalman filter is an optimal linear least-means-squared estimator. In the preferred embodiment, an extended Kalman filter is used. An extended Kalman filter uses a linearized model based on the current state of a non-linear system to compute least-means-squared estimates. While the discussion uses "Kalman filter" and "Kalman filtering", it applies equally well to "extended Kalman filter" and "extended Kalman filtering".

Kalman filtering is well known in the art. The same is true for GPS positioning systems. In fact, many references disclose integrating a Kalman filter, an inertial navigation unit and a GPS positioning system as a custom application to generate highly accurate vehicle position and dynamics. In these systems, a central processor performs the tasks including determining a dynamic position from the GPS positioning system, determining a dynamic position based on signals from the inertial navigation unit (INU), and performing the complicated command and control associated with both the GPS and INU subsystems. The central processor must also perform the Kalman filtering to obtain an estimate of a vehicle's operating point. These subsystems require extensive development and integration time, and in most cases, costly hardware.

In contrast, the present invention uses a commercially available GPS receiver, such as the MX 9212 from Magnavox Electronic Systems Company, Torrance, California, and off-the-shelf sensors to provide estimates of a vehicle's operating point. The role of the central processor (i.e., TRU processor 208) is to collect the measurements from the sensors, including the GPS receiver, and perform the Kalman filtering to estimate an operating point. In addition to having less costly components, the system requires less time to develop and integrate. Thus, the present invention can be implemented to produce an accurate operating point in an efficient, cost-effective manner.

However, some accuracy is lost in the estimates provided by the Kalman filter due to the fact that the GPS receiver performs some filtering internally. This causes two problems. First, the filtering in the GPS receiver introduces a time lag in the data it outputs. This results in the position and dynamics calculated by the GPS receiver to be consistently behind the true position and dynamics until the vehicle becomes stationary. When the vehicle has remained stationary for several seconds, the position calculated by the GPS receiver settles to the vehicle's true position. The time lag can be modelled in the Kalman filter to account for this.

In the preferred embodiment, the time lag is modelled as a first order lag for each of the four GPS receiver determined measurements used as inputs to the Kalman filter. This allows the Kalman filter to estimate what the measurement should be without the time lag. Four states are required in the Kalman filter to model the time lag. The four states are estimated receiver determined north position, estimated receiver determined east position, estimated receiver determined north velocity, and estimated receiver determined east velocity. By modelling the GPS receiver in this way, the effects of the lag can be reduced via the Kalman filter, resulting in a better estimate of the vehicle's operating point.

The second effect of the filtering performed by the GPS receiver is that white noise entering the GPS receiver leaves the receiver as colored noise. In other words, the noise is highly correlated. This degrades the performance of the Kalman filter somewhat because the noise entering a Kalman filter is assumed to be white or uncorrelated. Without extensive processing, little can be done to alleviate this problem. The result is slightly less accurate estimates of the vehicle's operating point.

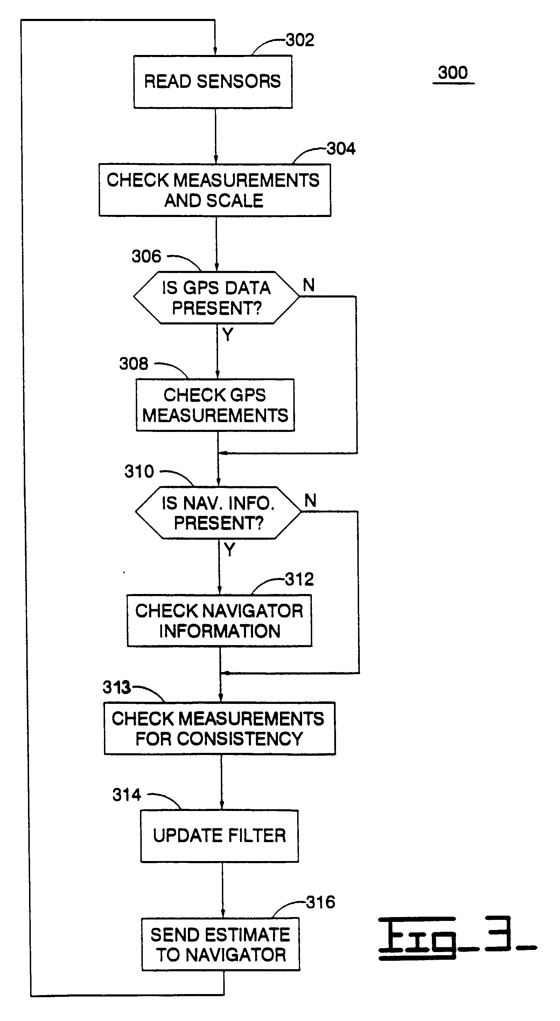

A flow chart illustrating the processing performed by TRU processor 208, including the Kalman filtering, is shown in FIG. 3. Processing begins in a step 302 by reading a measurement provided by each of the sensors. To accomplish this, TRU processor 208 reads digital register 205 on digital input card 204 to receive a measurement from odometer 230, speed indicator 232, or steering resolver 236, and reads analog register 207 on analog input card 206 to receive a measurement from heading rate sensor 234. In a step 304, TRU processor 208 scales each measurement obtained in step 302 and checks that the measurement falls within a valid range for the respective sensor.

In a decision step 306, TRU processor 208 checks serial interface 210 to determine whether new GPS receiver measurements are present. If new GPS receiver measurements are present, TRU processor 208 checks that the GPS receiver measurements fall within valid ranges in a step 308. Measurements that fail to fall within valid ranges are ignored. If no new GPS receiver measurements are present, processing continues at a step 310.

In a decision step 310, TRU processor 208 checks serial interface 210 to determine if new information from navigator 120 is present. Navigator 120 sends TRU 122 information regarding the steering angle and speed commands. If this information from navigator 120 is present, TRU processor 208 proceeds to a step 312. If no new information from navigator 120 is present, processing continues at a step 313.

In step 312, TRU processor 208 checks the information received from navigator 120 to verify that it falls within valid ranges. Information that fails to fall within valid ranges are ignored and not used in subsequent processing. After validating any information received from navigator 120, TRU processor 208 proceeds to step 313.

In step 313, TRU processor 208 checks the consistency of the sensor measurements received in step 302 and/or the GPS receiver measurements received in step 308 with the current operating point. If any of these measurements are inconsistent with the current operating point, those inconsistent measurements are ignored for purposes of updating the Kalman filter in a step 314. For example, if speed indicator 232 provides a speed measurement of 100 miles per hour (mph) and the current operating point indicates a speed of 10 mph, the speed measurement from speed indicator 232 is ignored because it is not likely for the speed to have changed by this amount during one filter update. A more likely result is that the measurement has been corrupted or the sensor is malfunctioning. Ignoring an inconsistent measurement is done to provide as reliable information to the Kalman filter as possible. After TRU processor 208 check the measurements for consistency and ignores any inconsistent measurements, processing continues at step 314.

In step 314, TRU processor 208 updates the Kalman filter with the sensor measurements received in step 302 and/or the GPS receiver measurements received in step 306. In the preferred embodiment, the sensor measurements are received at 10 Hertz (Hz), and the GPS receiver measurements are received at 1 Hz. Thus, the Kalman filter is updated with sensor measurements ten times as often as it is updated with GPS receiver measurements. It is well known in the art that a Kalman filter is well-suited to handle measurements from various sources and at different rates. In a step 316, TRU processor 208 provides navigator 120 with a new estimate of the operating point of the autonomous vehicle via serial interface 210.

The present invention uses different Kalman filters depending on whether the vehicle is moving. If the vehicle is moving the invention uses a nine-state Kalman filter to estimate the vehicle's operating point. The nine-state Kalman filter makes a better model of a moving vehicle. For purposes of this discussion, the nine-state Kalman filter model is referred to as a moving Kalman filter model. In the preferred embodiment, the states estimated using the moving Kalman filter model are estimated north position, estimated east position, estimated heading, estimated heading rate, estimated speed, and the four GPS receiver measurements: estimated receiver determined north position, estimated receiver determined east position, estimated receiver determined north velocity, and estimated receiver determined east velocity.

If the vehicle is stationary, the invention uses a four-state Kalman filter. The four-state Kalman filter makes a better model of a stationary vehicle. The four-state Kalman filter model is referred to as a stationary Kalman filter model. The states estimated using the stationary Kalman filter model are estimated north position, estimated east position, estimated receiver determined north position, and estimated receiver determined east position.

Changing filter models when the vehicle is not moving (i.e. stationary) allows the Kalman filter to converge more rapidly, without the effects of noise from sensors providing unnecessary measurements. For example, position is modelled in a Kalman filter as the integral of velocity. Due to the effect of integration, a small error in the speed measurement (e.g. due to offsets, drift, etc.) can result in large errors in the position estimates. Likewise, a small error in the heading rate measurement results in a large error in the heading estimate. Even though the Kalman filter may eventually converge to the true operating point, the overall system response is enhanced by changing Kalman filter models.

In this case, the moving and stationary Kalman filter models differ in that the stationary model eliminates a number of states from the moving model. In the preferred embodiment, the eliminated states are estimated receiver determined north velocity, estimated receiver determined east velocity, estimated heading, estimated heading rate, and estimated speed. Ultimately, the stationary Kalman filter model more accurately models a stationary vehicle, resulting in better estimates of the vehicle's operating point (which in the stationary case boils down to the vehicle's position).

When the vehicle becomes stationary, the present invention switches the Kalman filter from the moving Kalman filter model to the stationary Kalman filter model. In the preferred embodiment, the odometer is used to determine whether the vehicle is moving or stationary. If the odometer changes by less than a threshold value for 5 consecutive filter updates, the vehicle is deemed stationary. Conversely, the vehicle is deemed moving if the odometer measurement changes by more than the threshold at any filter update. One skilled in the art would recognize that other methods may be used to determine whether the vehicle is stationary or moving. For example, the estimate of the vehicle's speed obtained from the Kalman filter could be compared to a threshold or a different number of consecutive updates could be used.

In the preferred embodiment, changing the Kalman filter from using a moving Kalman filter model to a stationary Kalman filter model is accomplished by initializing a stationary Kalman filter (e.g., a filter using the stationary Kalman filter model) with values obtained from the last update of the moving Kalman filter (e.g., a filter using the moving Kalman filter model). For example, the initial values of the states in the stationary Kalman filter are values of the last estimates calculated by the moving Kalman filter. The last estimate of the previous filter is the best guess with which to start the new filter. A similar rationale is used for the error covariance matrix. Here, though, the terms along the main diagonal of the moving Kalman filter, which represent the covariances of the estimates of the states, are used to construct a diagonal covariance matrix for the stationary Kalman filter. The values of the remaining matrices are the same except for a corresponding reduction in their order.

When switching from a stationary Kalman filter model to a moving Kalman filter model, a similar process is used in reverse. The diagonal terms of the stationary Kalman filter's covariance matrix are used to initialize the diagonal of the moving Kalman filter's covariance matrix. Values for the remaining five diagonal terms are selected in a manner similar to that well known in the art for initial values of a covariance matrix.

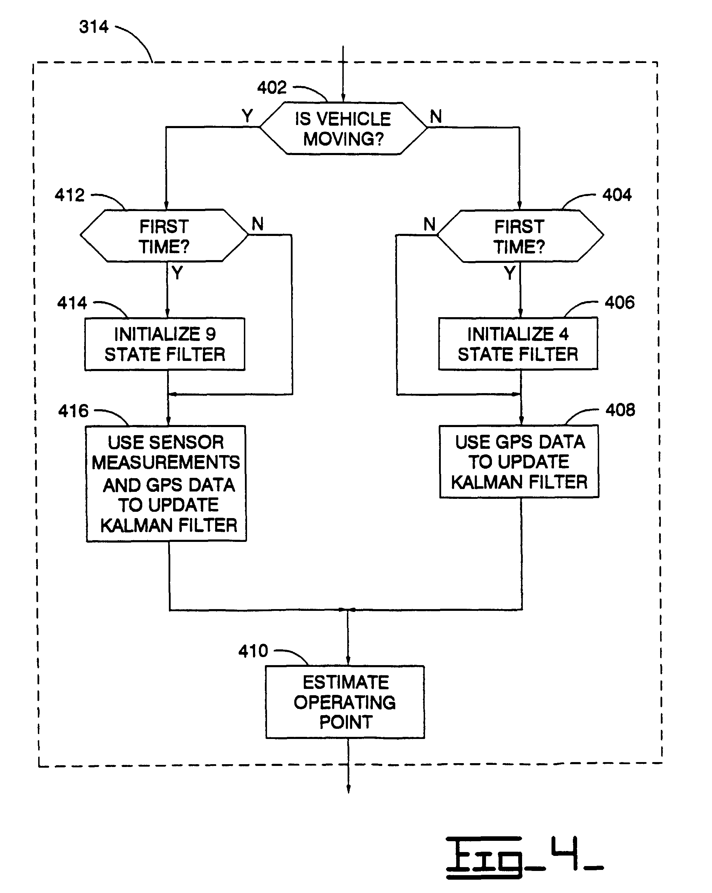

The foregoing discussion is illustrated in Fig. 4, which shows the processing of step 314 in greater detail. In a decision step 402, TRU processor 208 determines if the vehicle is moving. In the preferred embodiment, TRU processor looks for the change in the odometer to be below a threshold for at least five times through the processing loop shown in Fig. 3. If TRU processor 208 determines that the vehicle is not moving, TRU processor determines whether the Kalman filter needs to be initialized in a decision step 404. The Kalman filter will need to be initialized if TRU processor 208 determined that the vehicle status had changed from moving to non-moving in prior step 402. If the Kalman filter needs to be initialized, TRU processor 208 will initialize a stationary Kalman filter in a step 406 as discussed above. Next, in a step 408, TRU processor 208 updates the Kalman filter using only GPS receiver measurements. In a step 410, TRU processor 208 uses the updated Kalman filter to estimate the vehicle's operating point.

If TRU processor 208 determines that the vehicle is moving, TRU processor determines whether the Kalman filter needs to be initialized in a decision step 412. The Kalman filter will need to be initialized if TRU processor 208 determined that the vehicle status had changed from non-moving to moving in prior step 402. If the Kalman filter needs to be initialized, TRU processor 208 will initialize a moving Kalman filter in a step 414 as discussed above. Next, in a step 416, TRU processor 208 updates the Kalman filter using both GPS receiver measurements and measurements received from odometer 230, doppler ground speed indicator 232, heading rate sensor 234, and steering resolver 236. In a step 410, TRU processor 208 uses the updated Kalman filter to estimate the vehicle's operating point.

## Claims

1. A computer-based system (100) for precisely determining an operating point for a land based vehicle, comprising:
receiver means (216), mounted on the vehicle, for receiving navigation signals from a satellite-based positioning system (218) and for determining a receiver determined position for the vehicle using said navigation signals;
sensor means (230,232,234,236) for measuring at least one dynamic parameter of the vehicle; and
Kalman filtering means (208) for combining said receiver determined position and said at least one dynamic parameter of the vehicle from said sensor means (230,232,234,236) to determine the operating point, wherein the operating point includes an estimated position, and
wherein said Kalman filtering means (208) includes
means for changing to a stationary Kalman filter model to achieve a better determination of the operating point when said sensor means (230,232,234,236) indicates that the vehicle is stationary; and **characterised in that**
said Kalman filtering means (208) includes
means for modelling a time lag associated with said receiver means (216) affecting the timeliness of the receiver determined position; and
means for using said modelled time lag and said receiver determined position to provide an improved estimated position.

2. The system (100) of claim 1, wherein said Kalman filtering means (208) includes means for changing to a moving Kalman filter model when said sensor means (230,232,234,236) indicates that the vehicle is moving.

3. The system (100) of claim 1 or claim 2, wherein said receiver means (216) also determines a receiver determined velocity for the vehicle.

4. The system (100) of claim 3, wherein said Kalman filtering mean(208) further comprises means for combining said receiver determined position, said at least one dynamic parameter of the vehicle from said sensor means (230,232,234,236), and said receiver determined velocity to determine the operating point.

5. The system (100) of claim 4, wherein the operating point includes said estimated position and an estimated speed.

6. The system (100) of claim 5, wherein said means for modelling said time lag comprises:
means for modelling said time lag as a first order time lag so that an estimated receiver determined position and an estimated receiver determined velocity are estimated from said receiver determined position and said receiver determined velocity, respectively.

7. The system (100) of claim 6, wherein said sensor means (230,232,234,236) includes:
a first sensor means (230) for measuring a distance travelled;
a second sensor means (232) for measuring a speed;
a third sensor means (234) for measuring a heading rate; and
a fourth sensor means (236) for measuring a steering angle.

8. The system (100) of claim 7, wherein the operating point includes said estimated position, said estimated speed, an estimated heading, and an estimated heading rate, said estimated position including an estimated north position and an estimated east position.

9. The system (100) of claim 8, wherein said stationary Kalman filter model includes Kalman filter states of an estimated receiver determined north position, an estimated receiver determined east position, said estimated north position, and said estimated east position.

10. The system (100) of claim 8, wherein said moving Kaiman filter model includes Kalman filter states of an estimated receiver determined north position, an estimated receiver determined east position, an estimated receiver determined north velocity, an estimated receiver determined east velocity, said estimated north position, said estimated east position, an estimated heading, an estimated heading rate, and said estimated speed.

11. The system (100) of any of claims 1 to 10, wherein said receiver means (216) is a GPS receiver.

12. The system (100) of claim 11, wherein:
said first measuring means (230) is a directional odometer.

13. The system (100) of claim 11 or claim 12, wherein: said second measuring means (232) is a doppler radar.

14. The system (100) of any of claims 11 to 13, wherein: said third measuring means is a solid-state angular rate sensor (234).

15. The system (100) of any of claims 11 to 14, wherein:
said fourth measuring means (236) is a resolver having a pulse-width modulated output.

16. A method (300) for precisely determining an operating point for a land-based vehicle, comprising:
(a) receiving navigation signals from a satellite-based positioning system (218) and determining a receiver determined position for the vehicle using said navigation signals;
(b) measuring a distance travelled by the vehicle;
(c) Kalman filtering said receiver determined position and said measured distance to determine the operating point for the vehicle, wherein the operating point includes an estimated position; and
(d) changing to a stationary Kalman filter model when said measured distance falls below a first threshold value,
**characterised in that**
said Kalman filtering includes modelling a time lag associated with said receiver means (216) which affects the timeliness of the receiver determined position; and
using said modelled time lag and said receiver determined position to provide an improved estimated position.

17. The method (300) of claim 16, further comprising the step after step (d) of:
(e) changing to a moving Kalman filter model when said measured distance travelled rises above a second threshold value.

18. The method (300) of claim 17, wherein step (a) further comprises determining a receiver determined velocity from said navigation signals.

19. The method (300) of claim 18, further including steps before step (c) of:
f) measuring a speed;
g) measuring a heading rate; and
h) measuring a steering angle.

20. The method (300) of claim 19, wherein step (c) further comprises:
Kalman filtering said receiver determined position, said receiver determined velocity, said measure distance travelled, a measured speed, a measured heading rate, and a measured steering angle to determine the operating point for the vehicle, wherein the operating point further includes a said estimated position, an estimated heading, an estimated heading rate, and an estimated speed.

## Patentansprüche

1. System (100), das auf einem Computer basiert, zum präzisen Bestimmen eines Betriebspunktes für ein Landfahrzeug bzw. einem auf Land basierenden Fahrzeug, wobei das System folgendes aufweist:
Empfängermittel (216), die an dem Fahrzeug angebracht sind, zum Empfang von Navigationssignalen von einem auf Satelliten basierenden Positioniersystem (218) und zum Bestimmen einer empfängerbestimmten Position für das Fahrzeug unter Verwendung der Navigationssignale;
Sensormittel (230, 232, 234, 236) zum Messen mindestens eines dynamischen Parameters des Fahrzeugs; und
Kalman-Filtermittel (208) zum Kombinieren der empfängerbestimmten Position und des mindestens einen dynamischen Parameters des Fahrzeugs von den Sensormitteln (230, 232, 234, 236) zum Bestimmen des Betriebspunktes, wobei der Betriebspunkt eine geschätzte Position umfaßt und wobei die Kalman-Filtermittel (208) Mittel aufweist zum Wechseln zu einem stationären Kalman-Filtermodell, um eine bessere Bestimmung des Betriebspunktes zu erreichen, wenn die Sensormittel (230, 232, 234, 236) anzeigen, daß das Fahrzeug stationär ist;
dadurch gekennzeichnet, daß die Kalman-Filtermittel (208) folgendes aufweisen:
Mittel zum Modellieren einer Zeitverzögerung, die mit den Empfängermitteln (216) assoziiert ist, was die Zeitgenauigkeit bzw. die zeitliche Beziehung der empfängerbestimmten Position beeinflußt; und
Mittel zum Verwenden der modellierten Zeitverzögerung und der empfängerbestimmten Position, zum Vorsehen einer verbesserten geschätzten Position.

2. System (100) nach Anspruch 1, wobei die Kalman-Filtermittel (208) Mittel aufweisen zum Wechseln zu einem Bewegungs-Kalman-Filtermodell, wenn die Sensormittel (230, 232, 234, 236) anzeigen, daß sich das Fahrzeug bewegt.

3. System (100) nach Anspruch 1 oder 2, wobei die Empfängermittel (216) auch eine empfängerbestimmte Geschwindigkeit des Fahrzeugs bestimmen.

4. System (100) nach Anspruch 3, wobei die Kalman-Filtermittel (208) ferner Mittel aufweisen zum Kombinieren der empfängerbestimmten Position, des mindestens einen dynamischen Parameters des Fahrzeugs von den Sensormitteln (230, 232, 234, 236) und der empfängerbestimmten Geschwindigkeit, um den Betriebspunkt zu bestimmen.

5. System (100) nach Anspruch 4, wobei der Betriebspunkt die geschätzte Position und eine geschätzte Geschwindigkeit umfaßt.

6. System (100) nach Anspruch 5, wobei die Mittel zum Modellieren der Zeitverzögerung folgendes aufweisen:
Mittel zum Modellieren der Zeitverzögerung als eine Zeitverzögerung der ersten Ordnung, so daß eine geschätzte empfängerbestimmte Position und eine geschätzte empfängerbestimmte Geschwindigkeit geschätzt werden aus der empfängerbestimmten Position bzw. der empfängerbestimmten Geschwindigkeit.

7. System (100) nach Anspruch 6, wobei die Sensormittel (230, 232, 234, 236) folgendes aufweisen:
erste Sensormittel (230) zum Messen einer Reisedistanz bzw. der zurückgelegten Entfernung;
zweite Sensormittel (232) zum Messen einer Geschwindigkeit;
dritte Sensormittel (234) zum Messen einer Richtungsrate; und
vierte Sensormittel (236) zum Messen eines Lenkwinkels.

8. System (100) nach Anspruch 7, wobei der Betriebspunkt die geschätzte Position, die geschätzte Geschwindigkeit, eine geschätzte Richtung und eine geschätzte Richtungsrate aufweist, und wobei die geschätzte Position eine geschätzte Nordposition und eine geschätzte Ostposition aufweist.

9. System (100) nach Anspruch 8, wobei das stationäre Kalman-Filtermodell Kalman-Filterzustände einer geschätzten empfängerbestimmten Nordposition, eine geschätzte empfängerbestimmte Ostposition, die geschätzte Nordposition und die geschätzte Ostposition aufweist.

10. System (100) nach Anspruch 8, wobei das Bewegungs-Kalman-Filtermodell Kalman-Filterzustände einer geschätzten empfängerbestimmten Nordposition, einer geschätzten empfängerbestimmten Ostposition, einer geschätzten empfängerbestimmten Nordgeschwindigkeit, einer geschätzten empfängerbestimmten Ostgeschwindigkeit, die geschätzte Nordposition, die geschätzte Ostposition, eine geschätzte Richtung, eine geschätzte Richtungsrate und die geschätzte Geschwindigkeit aufweist.

11. System (100) nach einem der Ansprüche 1 bis 10, wobei die Empfängermittel (216) ein GPS-Empfänger ist.

12. System (100) nach Anspruch 11, wobei die ersten Meßmittel (230) ein Richtungsmeter bzw. -messer ist.

13. System (100) nach Anspruch 11 oder 12, wobei die zweiten Meßmittel (232) ein Dopplerradar ist.

14. System (100) nach einem der Ansprüche 11 bis 13, wobei die dritten Meßmittel ein Festkörper- bzw. Halbleiterwinkelratensensor (234) ist.

15. System (100) nach einem der Ansprüche 11 bis 14, wobei die vierten Meßmittel (236) ein Resolver bzw. Drehmelder mit einem impulsbreitenmodulierten Ausgangssignal ist.

16. Verfahren (300) zum präzisen Bestimmen eines Betriebspunktes eines Landfahrzeugs bzw. eines auf Land basierenden Fahrzeugs, das die folgenden Schritte aufweist:
(a) Empfangen von Navigationssignalen von einem auf Satelliten basierenden Positioniersystem (218) und Bestimmen einer empfängerbestimmten Position für das Fahrzeug unter Verwendung der Navigationssignale;
(b) Messen einer durch das Fahrzeug zurückgelegten Distanz;
(c) Durchführen eines Kalman-Filterschrittes der durch den Empfänger bestimmten Position und des gemessenen Abstands, um den Betriebspunkt für das Fahrzeug zu bestimmen, wobei der Betriebspunkt eine geschätzte Position umfaßt; und
(d) Wechseln zu einem stationären Kalman-Filtermodell, wenn der gemessene Abstand unter einen ersten Schwellenwert fällt,
dadurch gekennzeichnet, daß das Kalman-Filtermodell das Modellieren einer Zeitverzögerung umfaßt, die mit den Empängermitteln (216) assoziiert ist, welche die Zeitgenauigkeit bzw. zeitliche Beziehung der empfängerbestimmten Position beeinflußt; und
Verwenden der modellierten Zeitverzögerung und der empfängerbestimmten Position zum Vorsehen einer verbesserten geschätzten Position.

17. Verfahren (300) nach Anspruch 16, wobei das Verfahren nach dem Schritt (d) ferner den folgenden Schritt aufweist:
(e) Wechseln zu einem Bewegungs-Kalman-Filtermodell, wenn der zurückgelegte Abstand über einen zweiten Schwellenwert ansteigt.

18. Verfahren (300) nach Anspruch 17, wobei der Schritt (a) ferner das Bestimmen einer empfängerbestimmten Geschwindigkeit aus den Navigationssignalen aufweist.

19. Verfahren (300) nach Anspruch 18, wobei das Verfahren vor dem Schritt
(c) ferner die folgenden Schritte aufweist:
(f) Messen einer Geschwindigkeit;
(g) Messen einer Richtungsrate; und
(h) Messen eines Lenkwinkels.

20. Verfahren (300) nach Anspruch 19, wobei der Schritt (c) ferner folgendes aufweist:
Durchführen eines Kalman-Filtervorgangs der empfängerbestimmten Position, der empfängerbestimmten Geschwindigkeit, der gemessenen zurückgelegten Distanz, einer gemessenen Geschwindigkeit, einer gemessenen Richtungsrate und eines gemessenen Lenkwinkels, zum Bestimmen des Betriebspunktes für das Fahrzeug, wobei der Betriebspunkt ferner die geschätzte Position, eine geschätzte Richtung, eine geschätzte Richtungsrate und eine geschätzte Geschwindigkeit umfaßt.

## Revendications

1. Système informatique (100) pour déterminer avec précision la situation dynamique d'un véhicule terrestre comprenant :
un moyen récepteur (216) monté sur le véhicule pour recevoir les signaux de navigation d'un système de positionnement utilisant des satellites (218) et pour déterminer une position déterminée du récepteur du véhicule utilisant les signaux de navigation ;
un moyen détecteur (230, 232, 234, 236) pour mesurer au moins un paramètre dynamique du véhicule ; et
un moyen de filtre de Kalman (208) pour combiner la position déterminée du récepteur et au moins un paramètre dynamique du véhicule à partir du moyen détecteur (230, 232, 234, 236) pour déterminer la situation dynamique, dans lequel la situation dynamique inclut une position estimée, et
dans lequel le moyen de filtre de Kalman (208) comprend un moyen pour modifier un modèle de filtre de Kalman pour fournir une meilleure détermination de la situation dynamique quand le moyen détecteur (230, 232, 234, 236) indique que le véhicule est fixe ; et caractérisé en ce que le moyen de filtre de Kalman (208) comprend :
un moyen pour modéliser un retard temporel associé au moyen récepteur (216) affectant la pertinence de la position déterminée du récepteur ; et
un moyen pour utiliser le retard temporel modélisé et la position déterminée du récepteur pour fournir une position estimée améliorée.

2. Système (100) selon la revendication 1, dans lequel le moyen de filtre de Kalman (208) comprend un moyen pour passer à un modèle de filtre de Kalman en déplacement quand le moyen détecteur (230, 232, 234, 236) indique que le véhicule bouge.

3. Système (100) selon la revendication 1 ou 2, dans lequel le moyen récepteur (216) détermine également une vitesse déterminée du récepteur pour le véhicule.

4. Système (100) selon la revendication 3, dans lequel le moyen de filtre de Kalman (208) comprend en outre un moyen pour combiner la position déterminée du récepteur, ledit au moins un paramètre dynamique du véhicule à partir du moyen détecteur (230, 232, 234, 236), et la vitesse déterminée du récepteur pour déterminer la situation dynamique.

5. Système (100) selon la revendication 4, dans lequel la situation dynamique inclut la position estimée et une vitesse estimée.

6. Système (100) selon la revendication 5, dans lequel le moyen de modélisation du retard temporel comprend un moyen pour modéliser le retard temporel en tant que retard du premier ordre de sorte qu'une position estimée déterminée du récepteur et une vitesse estimée déterminée de récepteur sont estimées à partir de la position déterminée du récepteur et de la vitesse déterminée du récepteur, respectivement.

7. Système (100) selon la revendication 6, dans lequel le moyen détecteur (230, 232, 234, 236) comprend :
un premier moyen détecteur (230) pour mesurer une distance parcourue ;
un deuxième moyen détecteur (232) pour mesurer une vitesse ;
un troisième moyen détecteur (234) pour mesurer une variation de cap ; et
un quatrième moyen détecteur (236) pour mesurer un angle de direction.

8. Système (100) selon la revendication 7, dans lequel la situation dynamique comprend la position estimée, la vitesse estimée, un cap estimé et une variation de cap estimée, la position estimée comprenant une latitude estimée et une longitude estimée.

9. Système (100) selon la revendication 8, dans lequel le modèle de filtre de Kalman fixe comprend des états de filtre de Kalman d'une latitude estimée déterminée du récepteur, d'une longitude estimée déterminée du récepteur, de la longitude estimée, et de la longitude estimée.

10. Système (100) selon la revendication 8, dans lequel le modèle de filtre de Kalman mobile comprend des états de filtre de Kalman d'une latitude estimée déterminée du récepteur, d'une longitude estimée déterminée du récepteur, d'une vitesse vers le nord estimée déterminée du récepteur, d'une vitesse vers l'est estimée déterminée par le récepteur, de la latitude estimée, de la longitude estimée, d'un cap estimé, d'une variation de cap estimée, et de la vitesse estimée.

11. Système (100) selon l'une quelconque des revendications 1 à 10, dans lequel le moyen récepteur (216) est un récepteur GPS.

12. Système (100) selon la revendication 11, dans lequel le premier moyen de mesure (230) est un odomètre directionnel.

13. Système (100) selon la revendication 11 ou 12, dans lequel le second moyen de mesure (232) est un radar Doppler.

14. système (100) selon l'une quelconque des revendications 11 à 13, dans lequel le troisième moyen de mesure est un capteur de vitesse ondulaire statique (234).

15. Système (100) selon l'une quelconque des revendications 11 à 14, dans lequel le quatrième moyen de mesure (236) est un séparateur ayant une sortie modulée en largeur d'impulsion.

16. Procédé (300) pour déterminer avec précision la situation dynamique d'un véhicule terrestre, comprenant les étapes suivantes :
a) recevoir des signaux de navigation à partir d'un système de positionnement utilisant des satellites (218) et déterminer une position déterminée de récepteur pour le véhicule en utilisant les signaux de navigation ;
b) mesurer la distance parcourue par le véhicule ;
c) filtrer par un filtre de Kalman la position déterminée du récepteur et les distances mesurées pour déterminer la situation dynamique du véhicule, la situation dynamique comprenant une position estimée ; et
d) passer à un modèle de filtre de Kalman quand la distance mesurée chute en dessous d'une première valeur de seuil,
caractérisé en ce que :
le filtrage de Kalman inclut une modélisation d'un retard temporel associé au moyen de filtre (216) qui affecte la pertinence de la position déterminée par le récepteur ; et
on utilise le retard modélisé et la position déterminée du récepteur pour fournir une position estimée améliorée.

17. Procédé (300) selon la revendication 16, comprenant en outre, après l'étape d), l'étape suivante :
e) passer à un modèle de filtre de Kalman mobile quand la distance parcourue mesurée s'élève au-dessus d'une deuxième valeur de seuil.

18. Procédé (300) selon la revendication 17, dans lequel l'étape a) comprend en outre l'étape consistant à déterminer une vitesse déterminée du récepteur à partir des signaux de navigation.

19. Procédé (300) selon la revendication 18, comprenant en outre, avant l'étape c), les étapes suivantes :
f) mesurer une vitesse ;
g) mesurer une variation de cap ; et
h) mesurer un angle directionnel.

20. Procédé (300) selon la revendication 19, dans lequel l'étape c) comprend en outre filtrer par un filtre de Kalman la position déterminée du récepteur, la vitesse déterminée du récepteur, la distance de mesure parcourue, une vitesse mesurée, une variation de cap mesurée, et un angle de direction mesuré pour déterminer la situation dynamique du véhicule, la situation dynamique comprenant en outre la position estimée, un cap estimé, une variation de cap estimée, et une vitesse estimée.
